(19)

Europäisches
Patentamt
European
Patent Office
Office européen
des brevets

(11) **EP 3 375 815 A1**

(12) **EUROPEAN PATENT APPLICATION**
published in accordance with Art. 153(4) EPC

(43) Date of publication:
**19.09.2018 Bulletin 2018/38**

(21) Application number: **16875345.7**

(22) Date of filing: **22.11.2016**

(51) Int Cl.:
*C08L 23/06* (2006.01)  *C08K 3/22* (2006.01)
*C08K 3/26* (2006.01)  *C08K 5/098* (2006.01)
*C08L 23/26* (2006.01)  *G02B 6/44* (2006.01)
*H01B 3/44* (2006.01)  *H01B 7/02* (2006.01)
*H01B 7/295* (2006.01)  *C08L 83/04* (2006.01)

(86) International application number:
**PCT/JP2016/084640**

(87) International publication number:
**WO 2017/104361 (22.06.2017 Gazette 2017/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **14.12.2015  JP 2015243153**

(71) Applicant: **Fujikura Ltd.**
**Tokyo 135-8512 (JP)**

(72) Inventors:
• **TAIRA Seiichi**
**Sakura-shi**
**Chiba 285-8550 (JP)**
• **KOHRI Haruka**
**Sakura-shi**
**Chiba 285-8550 (JP)**
• **NAKAMURA Shoichiro**
**Sakura-shi**
**Chiba 285-8550 (JP)**

(74) Representative: **Hoffmann Eitle**
**Patent- und Rechtsanwälte PartmbB**
**Arabellastraße 30**
**81925 München (DE)**

(54) **FLAME-RETARDANT RESIN COMPOSITION, METAL CABLE USING SAME, OPTICAL FIBER CABLE, AND MOLDED ARTICLE**

(57)  A flame-retardant resin composition containing a base resin composed of polyethylene and an acid-modified polyolefin, calcium carbonate, aluminum hydroxide, a silicone compound, and a fatty acid-containing compound is disclosed. In this flame-retardant resin composition, the density of the low-density polyethylene is 912.4 kg/m³ or less, the content rate of the polyethylene in the base resin is 80% by mass or more and 99% by mass or less, the content rate of the acid-modified polyolefin in the base resin is 1% by mass or more and 20% by mass or less, the calcium carbonate is blended at a proportion of 10 parts by mass or more and 120 parts by mass or less with respect to 100 parts by mass of the base resin, the aluminum hydroxide is blended at a proportion of 5 parts by mass or more and 150 parts by mass or less with respect to 100 parts by mass of the base resin, the silicone compound is blended at a proportion of 1.5 parts by mass or more and 10 parts by mass or less with respect to 100 parts by mass of the base resin, and the fatty acid-containing compound is blended at a proportion of 5 parts by mass or more and 20 parts by mass or less with respect to 100 parts by mass of the base resin.

EP 3 375 815 A1

**Description**

FLAME-RETARDANT RESIN COMPOSITION AND METAL CABLE, OPTICAL FIBER CABLE, AND MOLDED ARTICLE USING THE SAME

TECHNICAL FIELD

The present invention relates to a flame-retardant resin composition and a metal cable, an optical fiber cable, and a molded article using the same.

BACKGROUND ART

So-called eco-materials are widely used for covering of cables, outer sheaths of cables, tubes, tapes, packaging materials, building materials and the like.

As such an eco-material, a flame-retardant resin composition in which a silicone compound and a fatty acid-containing compound as a flame retardant aid as well as calcium carbonate and aluminum hydroxide as a flame retardant are added to a polyolefin resin is known (See Patent Document 1 below).

CITATION LIST

PATENT DOCUMENT

Patent Document 1: WO 2015/111309 A

SUMMARY OF THE INVENTION

PROBLEM TO BE SOLVED BY THE INVENTION

By the way, in recent years, the flame-retardant resin composition has been required to exhibit not only excellent flame retardancy but also excellent mechanical properties, weather resistance, and chemical resistance so as to be applicable to various applications including cables.

However, the flame-retardant resin composition described in Patent Document 1 has room for improvement from the viewpoint of simultaneously satisfying excellent flame retardancy, mechanical properties, weather resistance, and chemical resistance although it exhibits excellent flame retardancy.

Hence, a flame-retardant resin composition which can simultaneously satisfy excellent flame retardancy, mechanical properties, weather resistance, and chemical resistance has been desired.

The present invention has been made in view of the above circumstances, and an object thereof is to provide a flame-retardant resin composition which can simultaneously satisfy excellent flame retardancy, mechanical properties, weather resistance, and chemical resistance and a metal cable, an optical fiber cable, and a molded article using the same.

MEANS FOR SOLVING PROBLEM

The present inventors have repeatedly conducted studies to solve the above problem. As a result, the present inventors have found out that the above problem can be solved by blending calcium carbonate, aluminum hydroxide, a silicone compound, and a fatty acid-containing compound to a base resin composed of polyethylene and an acid-modified polyolefin at predetermined proportions, respectively, setting the content rates of the polyethylene and the acid-modified polyolefin in the base resin to predetermined proportions, respectively, and further setting the density of the polyethylene in the base resin to a specific value or less.

In other words, the present invention is a flame-retardant resin composition containing a base resin composed of polyethylene and an acid-modified polyolefin, calcium carbonate, aluminum hydroxide, a silicone compound, and a fatty acid-containing compound, in which the density of the polyethylene is 912.4 $kg/m^3$ or less, the content rate of the polyethylene in the base resin is 80% by mass or more and 99% by mass or less, the content rate of the acid-modified polyolefin in the base resin is 1% by mass or more and 20% by mass or less, the calcium carbonate is blended at a proportion of 10 parts by mass or more and 120 parts by mass or less with respect to 100 parts by mass of the base resin, the aluminum hydroxide is blended at a proportion of 5 parts by mass or more and 150 parts by mass or less with respect to 100 parts by mass of the base resin, the silicone compound is blended at a proportion of 1.5 parts by mass or more and 10 parts by mass or less with respect to 100 parts by mass of the base resin, and the fatty acid-containing compound is blended at a proportion of 5 parts by mass or more and 20 parts by mass or less with respect to 100 parts by mass of the base resin.

According to the flame-retardant resin composition of the present invention, it is possible to simultaneously satisfy excellent flame retardancy, mechanical properties, weather resistance, and chemical resistance.

Incidentally, the present inventors presume the reason why the above-described effect is obtained in the flame-retardant resin composition of the present invention as follows.

In other words, aluminum hydroxide causes heat absorption by dehydration at a relatively low temperature at the early stage of combustion of the flame-retardant resin composition when aluminum hydroxide is contained in the flame-retardant resin composition. By this, the temperature rise and ignition of the base resin in the flame-retardant resin composition are suppressed or continuation of combustion is hindered. In addition, when calcium carbonate, aluminum hydroxide, a silicone compound, and a fatty acid-containing compound are contained in the flame-retardant resin composition, a barrier layer mainly composed of calcium carbonate, aluminum hydroxide, the silicone compound, the fatty acid-containing compound, and decomposed products thereof is formed on the surface of the base resin and combustion of the base resin is suppressed at the time of combustion of the flame-retardant resin composition. Hence, it is considered that excellent flame retardancy is secured by the synergistic effect of the two kinds of flame retardant actions of heat absorption by dehydration and formation of the barrier layer at the time of combustion. In addition, it is possible to improve the receptivity of calcium carbonate and aluminum hydroxide in polyethylene by using polyethylene having a density of 912.4 kg/m$^3$ or less as the polyethylene contained in the base resin. Hence, it is considered that excellent mechanical properties and weather resistance are secured even when the amounts of calcium carbonate and aluminum hydroxide blended are increased. Furthermore, it is considered that the adhesive property of the low-density polyethylene with calcium carbonate and aluminum hydroxide is improved and excellent chemical resistance is secured as an acid-modified polyolefin is contained in the base resin.

In the flame-retardant resin composition, it is preferable that the density of the polyethylene be 905.3 kg/m$^3$ or less.

In this case, more excellent weather resistance is obtained in the flame-retardant resin composition as compared to a case in which the density of polyethylene exceeds 905.3 kg/m$^3$.

In the flame-retardant resin composition, it is preferable that the acid-modified polyolefin be a maleic anhydride-modified polyolefin.

In this case, the mechanical properties are more excellent as compared to a case in which the acid-modified polyolefin is an acid-modified polyolefin other than the maleic anhydride-modified polyolefin.

In the flame-retardant resin composition, it is preferable that the aluminum hydroxide be blended to the base resin at a proportion of 5 parts by mass or more and 100 parts by mass or less.

In this case, more excellent flame retardancy and mechanical properties are obtained in the flame-retardant resin composition as compared to a case in which the proportion of aluminum hydroxide blended to 100 parts by mass of the base resin is out of the above range.

In the flame-retardant resin composition, it is preferable that the silicone compound be silicone gum.

In this case, bloom is less likely to occur as compared to a case in which the silicone compound is a silicone compound other than silicone gum.

In the flame-retardant resin composition, it is preferable that the fatty acid-containing compound be magnesium stearate.

In this case, it is possible to obtain more excellent flame retardancy by adding magnesium stearate in a smaller amount as compared to a case in which the fatty acid-containing compound is a fatty acid-containing compound other than magnesium stearate.

In the flame-retardant resin composition, it is preferable that the fatty acid-containing compound be blended to the base resin at a proportion of 7 parts by mass or more and 20 parts by mass or less.

In this case, more excellent flame retardancy is obtained in the flame-retardant resin composition as compared to a case in which the proportion of the fatty acid-containing compound blended to 100 parts by mass of the base resin is out of the above range.

In addition, the present invention is a metal cable including a metal conductor and an insulating body covering the metal conductor, in which the insulating body is composed of the flame-retardant resin composition described above.

Furthermore, the present invention is an optical fiber cable including an optical fiber and an insulating body covering the optical fiber, in which the insulating body is composed of the flame-retardant resin composition described above.

In addition, the present invention is a molded article including the flame-retardant resin composition described above.

According to the molded article of the present invention, it is possible to simultaneously satisfy excellent flame retardancy, mechanical properties, weather resistance, and chemical resistance.

Incidentally, in the present invention, the density in a case in which the polyethylene is composed of a mixture of plural kinds of polyethylenes having different densities refers to the value obtained by summing up the values X calculated by the following formula for the respective polyethylenes.

$$X = \text{density of polyethylene} \times \text{content rate of polyethylene in mixture (unit: \% by mass)}$$

EFFECT OF THE INVENTION

According to the present invention, a flame-retardant resin composition which can simultaneously satisfy excellent flame retardancy, mechanical properties, weather resistance, and chemical resistance, and a metal cable, an optical fiber cable and a molded article using the same are provided.

BRIEF DESCRIPTION OF DRAWINGS

    Fig. 1 is a partial side view illustrating an embodiment of the metal cable of the present invention;
    Fig. 2 is a cross-sectional view taken along the line II-II of Fig. 1; and
    Fig. 3 is a cross-sectional view illustrating an embodiment of the optical fiber cable of the present invention.

MODE(S) FOR CARRYING OUT THE INVENTION

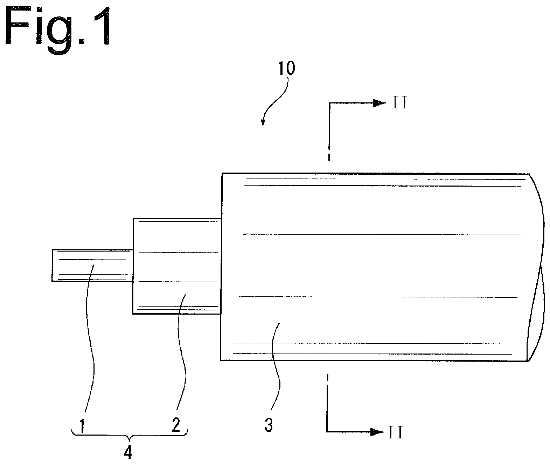

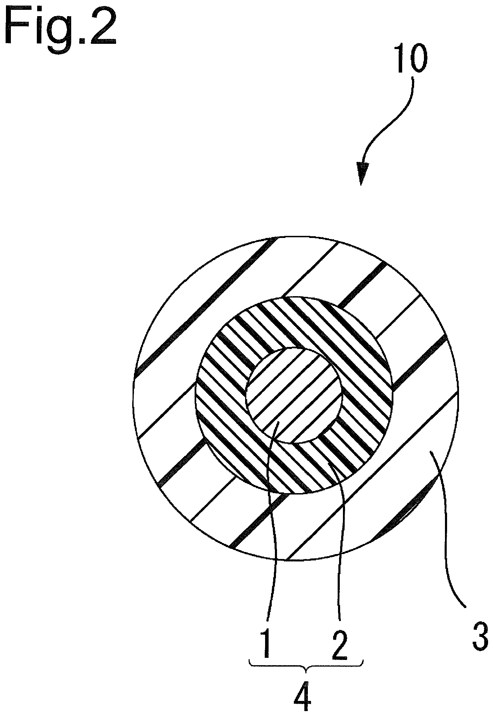

Hereinbelow, the embodiments of the present invention are explained in detail by using Fig. 1 and Fig. 2.

[Cable]

Fig. 1 is a partial side view illustrating an embodiment of a metal cable according to the present invention. Fig. 2 is a cross-sectional view taken along the line II - II of Fig. 1. As illustrated in Fig. 1 and Fig. 2, a round cable 10 as a metal cable is equipped with an insulating wire 4 and a tubular outer sheath 3 as an insulating body which covers the insulating wire 4. Moreover, the insulating wire 4 has an internal conductor 1 as a metal conductor and a tubular insulating body 2 which covers the internal conductor 1. In other words, the tubular outer sheath 3 indirectly covers the internal conductor 1 in the round cable 10.

Here, the tubular insulating body 2 and the outer sheath 3 are composed of a flame-retardant resin composition, and this flame-retardant resin composition contains a base resin composed of polyethylene and an acid-modified polyolefin, calcium carbonate, aluminum hydroxide, a silicone compound, and a fatty acid-containing compound. In this flame-retardant resin composition, the density of polyethylene is 912.4 kg/m$^3$ or less, the content rate of polyethylene in the base resin is 80% by mass or more and 99% by mass or less, and the content rate of the acid-modified polyolefin in the base resin is 1% by mass or more and 20% by mass or less. Calcium carbonate is blended at a proportion of 10 parts by mass or more and 120 parts by mass or less with respect to 100 parts by mass of the base resin, aluminum hydroxide is blended at a proportion of 5 parts by mass or more and 150 parts by mass or less with respect to 100 parts by mass of the base resin, the silicone compound is blended at a proportion of 1.5 parts by mass or more and 10 parts by mass or less with respect to 100 parts by mass of the base resin, and the fatty acid-containing compound is blended at a proportion of 5 parts by mass or more and 20 parts by mass or less with respect to 100 parts by mass of the base resin.

The insulating body 2 and the outer sheath 3 which are composed of the above-described flame-retardant resin composition can simultaneously satisfy excellent flame retardancy, mechanical properties, weather resistance, and chemical resistance.

[Method for producing a cable]

Next, explanations are given for the method for producing the round cable 10 described above.

<Metal Conductor>

First, the internal conductor 1 is prepared as a metal conductor. The internal conductor 1 may consist of only a single wire or consist of a bundle of plural single wires. Furthermore, the internal conductor 1 is not particularly limited in terms of conductor diameter or conductor material, and it can be suitably determined depending on use.

<Flame retardant resin composition>

On the other hand, the flame retardant resin composition is prepared. As described above, the flame retardant resin composition contains the base resin composed of polyethylene and an acid-modified polyolefin resin, calcium carbonate, aluminum hydroxide, the silicone compound and the fatty acid containing compound.

(1) Base Resin

As described above, the base resin is composed of polyethylene and an acid-modified polyolefin. In other words, the sum of the content rate of polyethylene and the content rate of acid-modified polyolefin in the base resin is 100% by mass.

The density of polyethylene is 912.4 $kg/m^3$ or less. Here, the reason why the density of polyethylene is set to 912.4 $kg/m^3$ or less is because the receptivity of calcium carbonate and aluminum hydroxide in polyethylene is improved and more excellent mechanical properties and weather resistance are obtained in the flame-retardant resin composition as compared to a case in which the density is greater than 912.4 $kg/m^3$. The density of polyethylene is preferably 905.3 $kg/m^3$ or less. In this case, the mechanical properties and weather resistance are more excellent as compared to a case in which the density of polyethylene exceeds 905.3 $kg/m^3$. However, the density of low-density polyethylene is preferably 890.8 $kg/m^3$ or more. In this case, the wear resistance is more excellent as compared to a case in which the density of polyethylene is less than 890.8 $kg/m^3$. The density of polyethylene is more preferably 895 $kg/m^3$ or more. In this case, more excellent weather resistance is obtained in the flame-retardant resin composition as compared to a case in which the density of polyethylene is less than 895 $kg/m^3$. The density of polyethylene is still more preferably 900 $kg/m^3$ or more.

The polyethylene may be linear polyethylene, branched polyethylene, or a mixture thereof. However, it is preferable that the polyethylene include linear polyethylene since molding is facilitated.

The polyethylene may be composed of only one kind of polyethylene or a mixture of plural kinds of polyethylenes having different densities. In a case in which the polyethylene is composed of a mixture of polyethylenes having different densities, it is acceptable that the density of the mixture is 912.4 $kg/m^3$ or less as a whole even though some polyethylenes in the mixture have a density greater than 912.4 $kg/m^3$.

The content rate of the acid-modified polyolefin in the base resin is 1% by mass or more and 20% by mass or less. In this case, the adhesive property of the polyethylene with calcium carbonate and aluminum hydroxide is further improved and more excellent chemical resistance is obtained in the flame retardant resin composition in the long term as compared to a case in which the content rate of the acid-modified polyolefin in the base resin is less than 1% by mass. In addition, the appearance of the flame-retardant resin composition after extrusion is more favorable as compared to a case in which the content rate of the acid-modified polyolefin in the base resin is greater than 20% by mass. The content rate of the acid-modified polyolefin in the base resin is preferably 5% by mass or more and 15% by mass or less and more preferably 7% by mass or more and 12% by mass or less.

The acid-modified polyolefin is one obtained by modifying a polyolefin with an acid or an acid anhydride. Examples of the polyolefin include a polyolefin containing an ethylene unit and a polyolefin containing a propylene unit. As the polyolefin, a polyolefin containing an ethylene unit is preferable. Examples of the polyolefin containing an ethylene unit include polyethylene; and an ethylene-$\alpha$-olefin copolymer such as an ethylene-propylene copolymer. In addition, the polyolefin containing a propylene unit is a polyolefin which contains a propylene unit but does not contain an ethylene unit, and examples of such a polyolefin containing a propylene unit include polypropylene. Examples of the acid include acrylic acid and methacrylic acid, and examples of the acid anhydride include maleic anhydride and carboxylic acid anhydride. Examples of the acid-modified polyolefin include an ethylene-ethyl acrylate copolymer, an ethylene-vinyl acetate copolymer, and a maleic anhydride-modified polyolefin. Among these, a maleic anhydride-modified polyolefin is preferable as the acid-modified polyolefin. In this case, the mechanical properties are excellent as compared to a case in which the acid-modified polyolefin is an acid-modified polyolefin other than the maleic anhydride-modified polyolefin. As the maleic anhydride-modified polyolefin, a maleic anhydride-modified polyethylene is preferable.

(2) Calcium carbonate

Calcium carbonate may be any of heavy calcium carbonate and light calcium carbonate.

Calcium carbonate is blended at a proportion of 10 parts by mass or more and 120 parts by mass or less with respect to 100 parts by mass of the base resin. In this case, it is possible to more sufficiently suppress bleeding of the silicone compound and the fatty acid-containing compound as well as it is possible to further strengthen the char (shell) of the silicone compound at the time of combustion of the flame-retardant resin composition and more excellent flame retardancy is thus obtained as compared to a case in which the proportion of calcium carbonate blended with respect to 100 parts by mass of the base resin is less than 10 parts by mass. In addition, more excellent mechanical properties and weather resistance are obtained as well as more excellent flame retardancy is obtained in the flame retardant resin composition, as compared to a case in which the proportion of calcium carbonate blended with respect to 100 parts by mass of the base resin is greater than 120 parts by mass.

The proportion of calcium carbonate blended with respect to 100 parts by mass of the base resin is preferably 20 parts by mass or more. In this case, more excellent flame retardancy is obtained as compared to a case in which the proportion of calcium carbonate blended with respect to 100 parts by mass of the base resin is less than 20 parts by mass. The proportion of calcium carbonate blended with respect to 100 parts by mass of the base resin is more preferably 30 parts by mass or more.

In addition, the proportion of calcium carbonate blended with respect to 100 parts by mass of the base resin is preferably 80 parts by mass or less. In this case, more excellent flame retardancy is obtained as compared to a case in which the proportion of calcium carbonate blended with respect to 100 parts by mass of the base resin exceeds 80 parts by mass. The proportion of calcium carbonate blended with respect to 100 parts by mass of the base resin is more preferably 70 parts by mass or less and still more preferably 50 parts by mass or less.

Furthermore, the proportion of calcium carbonate blended with respect to 100 parts by mass of the base resin is preferably from 20 to 80 parts by mass. In this case, still more excellent flame retardancy is obtained in the flame-retardant resin composition as compared to a case in which the proportion of calcium carbonate blended with respect to 100 parts by mass of the base resin is out of the above range. The proportion of calcium carbonate blended with respect to 100 parts by mass of the base resin is more preferably from 30 to 50 parts by mass.

(3) Aluminum Hydroxide

Aluminum hydroxide is blended at a proportion of 5 parts by mass or more and 150 parts by mass or less with respect to 100 parts by mass of the base resin. In this case, more excellent flame retardancy is obtained in the flame retardant resin composition since spread of fire can be suppressed by the endothermic reaction of aluminum hydroxide as compared to a case in which the proportion of aluminum hydroxide blended with respect to 100 parts by mass of the base resin is less than 5 parts by mass. In addition, more excellent mechanical properties and weather resistance are obtained in the flame retardant resin composition as compared to a case in which the proportion of aluminum hydroxide blended with respect to 100 parts by mass of the base resin is greater than 150 parts by mass.

The proportion of aluminum hydroxide blended with respect to 100 parts by mass of the base resin is preferably 20 parts by mass or more. In a case in which the proportion of aluminum hydroxide blended with respect to 100 parts by mass of the base resin is within the above range, more excellent flame retardancy is obtained in the flame retardant resin composition as compared to a case in which the proportion of aluminum hydroxide blended is less than 20 parts by mass. The proportion of aluminum hydroxide blended with respect to 100 parts by mass of the base resin is more preferably 40 parts by mass or more and still more preferably 50 parts by mass or more.

In addition, the proportion of aluminum hydroxide blended with respect to 100 parts by mass of the base resin is preferably 100 parts by mass or less. In this case, the flame retardancy, mechanical properties, and weather resistance are more excellent as compared to a case in which the proportion of aluminum hydroxide blended with respect to 100 parts by mass of the base resin exceeds 100 parts by mass. The proportion of aluminum hydroxide blended with respect to 100 parts by mass of the base resin is more preferably 80 parts by mass or less and still more preferably 70 parts by mass or less.

(2) Silicone compound

The silicone compound is a compound which functions as a flame retardant aid. Examples of the silicone compound include polyorganosiloxanes. Here, the polyorganosiloxanes are compounds which have siloxane bonds in the main chain and have organic groups in side chains. Examples of the organic groups include, for example, a methyl group, a vinyl group, an ethyl group, a propyl group, and a phenyl group. Specific examples of the polyorganosiloxanes include dimethyl polysiloxane, methylethyl polysiloxane, methyloctyl polysiloxane, methylvinyl polysiloxane, methylphenyl polysiloxane, and methyl-(3,3,3-trifluoropropyl)polysiloxane. The polyorganosiloxane is used in the form of silicone oil, silicone powder, silicone gum, or silicone resin. Among them, the polyorganosiloxane is preferably used in the form of silicone gum. In this case, blooming is less likely to occur.

As described above, the silicone compound is blended at a proportion of 1.5 parts by mass or more and 10 parts by mass or less with respect to 100 parts by mass of the base resin. In this case, more excellent flame retardancy is obtained in the flame-retardant resin composition as compared to a case in which the proportion of the silicone compound blended with respect to 100 parts by mass of the base resin is less than 1.5 parts by mass. In addition, more excellent weather resistance is obtained as well as it is possible to more sufficiently suppress bleeding of the silicone compound in the flame-retardant resin composition since the silicone compound is more likely to be evenly mixed in the base resin and it is difficult for a lump to be partially generated as compared to a case in which the proportion of the silicone compound blended with respect to 100 parts by mass of the base resin is greater than 10 parts by mass.

The proportion of the silicone compound blended with respect to 100 parts by mass of the base resin is preferably 5 parts by mass or more. In this case, more excellent flame retardancy is obtained in the flame-retardant resin composition as compared to a case in which the proportion of the silicone compound blended is less than 5 parts by mass. However, the proportion of the silicone compound blended is preferably 7 parts by mass or less.

The silicone compound may be previously attached to the surface of at least one of calcium carbonate and aluminum hydroxide. In this case, segregation of the silicone compound is less likely to occur in the flame retardant resin composition and the uniformity of properties in the flame retardant resin composition is further improved.

Examples of a method of obtaining the silicone compound attached to the surface of at least one of calcium carbonate and aluminum hydroxide can include obtaining it by adding the silicone compound to at least one of calcium carbonate and aluminum hydroxide to obtain a mixture, drying the mixture for 10 to 40 minutes at 40 to 75°C, and pulverizing the dried mixture using a Henschel mixer, an atomizer, or the like, for example.

(5) Fatty acid containing compound

The fatty acid containing compound functions as a flame retardant aid. The fatty acid containing compound indicates a compound containing a fatty acid or a metal salt thereof. Herein, as the fatty acid, a fatty acid having carbon atom number of 12 to 28 is used, for example. Examples of such a fatty acid include lauric acid, myristic acid, palmitic acid, stearic acid, tuberculostearic acid, oleic acid, linoleic acid, arachidonic acid, behenic acid, and montanic acid. Among them, stearic acid or tuberculostearic acid is preferable as the fatty acid, and stearic acid is particularly preferable. In this case, more excellent flame retardancy is obtained as compared to a case in which a fatty acid other than tuberculostearic acid or stearic acid is used.

The fatty acid containing compound is preferably a fatty acid metal salt. Examples of the metal constituting the fatty acid metal salt include magnesium, calcium, zinc, and lead. As the fatty acid metal salt, magnesium stearate is preferable. In this case, more excellent flame retardancy is obtained with smaller addition amount in the flame retardant resin composition as compared to a case in which a fatty acid metal salt other than magnesium stearate is used.

As described above, the fatty acid-containing compound is blended at a proportion of 5 parts by mass or more and 20 parts by mass or less with respect to 100 parts by mass of the base resin. In this case, more excellent flame retardancy is obtained as compared to a case in which the proportion of the fatty acid-containing compound blended with respect to 100 parts by mass of the base resin is less than 5 parts by mass. In addition, more excellent weather resistance is obtained as well as it is possible to more sufficiently suppress bleeding of the fatty acid-containing compound as compared to a case in which the proportion of the fatty acid-containing compound blended with respect to 100 parts by mass of the base resin is greater than 20 parts by mass.

The proportion of the fatty acid-containing compound blended with respect to 100 parts by mass of the base resin is preferably 7 parts by mass or more. In this case, more excellent flame retardancy is obtained as compared to a case in which the proportion of the fatty acid-containing compound blended with respect to 100 parts by mass of the base resin is less than 7 parts by mass. However, the proportion of the fatty acid-containing compound blended with respect to 100 parts by mass of the base resin is preferably 10 parts by mass or less.

The fatty acid-containing compound may be previously attached to the surface of at least one of calcium carbonate and aluminum hydroxide. In this case, segregation of the fatty acid-containing compound in the flame-retardant resin composition is less likely to occur and the uniformity of properties in the flame-retardant resin composition is further improved. Furthermore, the fatty acid-containing compound and the silicone compound may be previously attached to the surface of at least one of calcium carbonate and aluminum hydroxide. In this case, the segregation of the silicone compound and the fatty acid-containing compound in the flame-retardant resin composition is less likely to occur and the uniformity of properties in the flame-retardant resin composition is further improved.

Examples of a method of obtaining the silicone compound and the fatty acid-containing compound attached to the surface of at least one of calcium carbonate and aluminum hydroxide can include obtaining it by adding the silicone compound and the fatty acid-containing compound to at least one of calcium carbonate and aluminum hydroxide to obtain a mixture, drying the mixture for 10 to 40 minutes at 40 to 75°C, and pulverizing the dried mixture using a Henschel mixer, an atomizer, or the like, for example.

The flame retardant resin composition may include an anti-oxidant, a UV degradation preventing agent, a processing aid, a coloring pigment, a filler such as a lubricating agent or the like, if necessary.

The flame-retardant resin composition can be obtained by kneading a base resin composed of polyethylene and an acid-modified polyolefin, calcium carbonate, aluminum hydroxide, a silicone compound, a fatty acid-containing compound, and the like. Kneading can be conducted using a kneading machine such as a Banbury mixer, a tumbler, a pressure kneader, a kneading extruder, a twin screw extruder, or a mixing roll. At this time, a master batch (MB) obtained by kneading a part of low-density polyethylene and the silicone compound may be kneaded with the remaining base resin, fatty acid-containing compound, aluminum hydroxide, calcium carbonate, and the like from the viewpoint of improving the dispersibility of the silicone compound.

Next, the internal conductor 1 is covered with the flame retardant resin composition. Specifically, the flame retardant resin composition is melt-kneaded using an extruding machine to form a tubular extrudate. Then, the tubular extrudate is continuously coated onto the internal conductor 1. Thus, the insulating wire 4 is obtained.

<Outer sheath>

Finally, one insulating wire 4 which has been obtained as described above is prepared, and this insulating wire 4 is covered with the outer sheath 3 as an insulating body which has been prepared using the flame retardant resin composition described above. The outer sheath 3 is a so-called sheath, and it protects the insulating body 2 from physical or chemical damages.

Thus, the round cable 10 is obtained.

[Molded Article]

The present invention is a molded article composed of the flame-retardant resin composition described above.

This molded article can simultaneously satisfy excellent flame retardancy, mechanical properties, weather resistance, and chemical resistance.

The above molded article can be obtained by a general molding method such as an injection molding method or an extrusion molding method.

The present invention is not limited to the above embodiment. For example, although the round cable 10 having one insulating wire 4 is used as a metal cable in the above embodiment, the metal cable of the present invention is not limited to the round cable, and it may be a cable which has two or more insulating wire 4 on the inner side of the outer sheath 3. A resin part consisting of polypropylene or the like may be provided between the outer sheath 3 and the insulating wire 4.

Furthermore, although the insulating body 2 and the outer sheath 3 of the insulating wire 4 is formed of the flame retardant resin composition in the above embodiment, the insulating body 2 may consist of a typical insulating resin and only the outer sheath 3 may consist of the flame retardant resin composition. Furthermore, the insulating body 2 is not necessarily required, and it can be omitted.

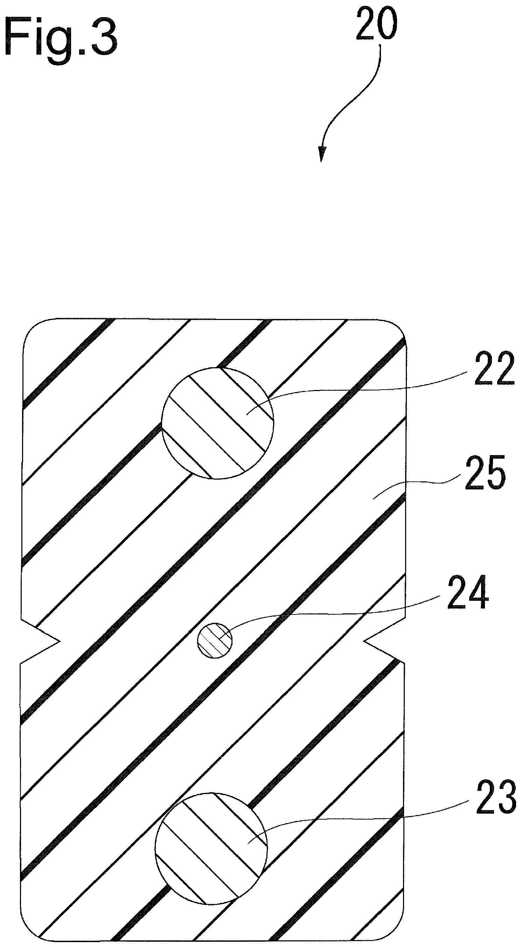

Furthermore, the flame-retardant resin composition constituting the insulating body 2 and outer sheath 3 of the insulating wire 4 in the above embodiment can also be applied as an outer sheath of an optical fiber cable which is equipped with an optical fiber and an insulating body (outer sheath) covering the optical fiber. For example, Fig. 3 is a cross-sectional view illustrating an indoor type optical fiber cable as an embodiment of the optical fiber cable of the present invention. As illustrated in Fig. 3, an indoor type optical fiber cable 20 is equipped with two tension members 22 and 23, an optical fiber 24, and a sheath 25 covering these. Here, the optical fiber 24 is provided so as to penetrate the sheath 25. Here, the sheath 25 is composed of the flame-retardant resin composition constituting the insulating body 2 and outer sheath 3 of the insulating wire 4 in the above embodiment.

Furthermore, the flame retardant resin composition of the present invention can be applied not only to the insulating body of the metal cable and the optical fiber cable described above but also to various uses such as a tube, a tape, wrapping material, and building material for which flame retardancy is required.

EXAMPLES

Hereinbelow, the contents of the present invention is more specifically explained in view of Examples and Comparative Examples. However, the present invention is not limited to the following Examples.

(Examples 1 to 21 and Comparative Examples 1 to 10)

Polyethylene (hereinafter referred to as the "polyethylene A"), an acid-modified polyolefin, a silicone masterbatch (silicone MB), a fatty acid-containing compound, calcium carbonate, aluminum hydroxide, an antioxidant, and an ultraviolet degradation inhibitor were blended in the amounts presented in Tables 1 to 6 and kneaded at 160°C for 15 minutes using a Banbury mixer, thereby obtaining flame-retardant resin compositions. Here, the silicone MB is a mixture of polyethylene (hereinafter referred to as the "polyethylene B") and silicone gum. Incidentally, in Tables 1 to 6, the unit of the amount of each component blended is parts by mass. In addition, in Tables 1 to 6, the sum of the amount of polyethylene A blended and the amount of acid-modified polyolefin blended is not 100 parts by mass, but the polyethylene in the base resin is composed of a mixture of the polyethylene A and the polyethylene B in the silicone MB, and thus the sum of the amount of polyethylene A blended and the amount of polyethylene B blended in the silicone MB becomes 100 parts by mass.

<Density>

In the flame-retardant resin compositions of Examples 1 to 21 and Comparative Examples 1 to 10, the density of polyethylene in the base resin was determined by the following formula. The results are presented in Tables 1 to 6.

Density of polyethylene in base resin ($kg/m^3$) = density ($kg/m^3$) of polyethylene A $\times$ content rate (% by mass) of polyethylene A in mixture + density ($kg/m^3$) of polyethylene B $\times$ content rate (% by mass) of polyethylene B in mixture

Specifically, the following ones were used as the polyethylene A, acid-modified polyolefin, silicone MB, fatty acid-containing compound, calcium carbonate, aluminum hydroxide, antioxidant, and ultraviolet degradation inhibitor.

(1) Polyethylene A

PE 1: Linear polyethylene: manufactured by Ube-Maruzen Polyethylene Co, Ltd., density: 904 $kg/m^3$
PE 2: Linear polyethylene: manufactured by Prime Polymer Co., Ltd., density: 890 $kg/m^3$
PE 3: Linear polyethylene: manufactured by Sumitomo Chemical Co., Ltd., density: 912 $kg/m^3$
PE 4: Linear polyethylene: manufactured by Sumitomo Chemical Co., Ltd., density: 920 $kg/m^3$

(2) Acid-Modified Polyolefin
Maleic anhydride-modified polyethylene: manufactured by Mitsui Chemicals, Inc.
Maleic anhydride-modified polypropylene: manufactured by Mitsui Chemicals, Inc.
Ethylene-ethyl acrylate copolymer: manufactured by Japan Polyethylene Corporation
Ethylene-vinyl acetate copolymer: manufactured by DU PONT-MITSUI POLYCHEMICALS CO., LTD.
(3) Silicone MB: manufactured by Shin-Etsu Chemical Co., Ltd. (containing silicone gum at 50% by mass and polyethylene B (density: 915 $kg/m^3$) at 50% by mass)
(4) Calcium carbonate: manufactured by Nitto Funka Kogyo K.K.
(5) Aluminum hydroxide: manufactured by Nippon Light Metal Co., Ltd.
(6) Fatty Acid-Containing Compound

Magnesium stearate: manufactured by ADEKA CORPORATION
Zinc stearate: manufactured by NOF CORPORATION
Calcium stearate: manufactured by SAKAI CHEMICAL INDUSTRY CO., LTD.
Stearic acid: manufactured by NOF CORPORATION
Behenic acid: manufactured by NOF CORPORATION
Montanic acid: manufactured by Clariant (Japan) K.K.

(7) Antioxidant Hindered phenol-based antioxidant: manufactured by BASF SE
(8) Ultraviolet Degradation Inhibitor Hindered amine-based light stabilizer: manufactured by SUNCHEMICAL CO., LTD.

[Evaluation on Properties]

The flame retardancy, mechanical properties, weather resistance, and chemical resistance of the flame-retardant resin compositions of Examples 1 to 21 and Comparative Examples 1 to 10 obtained as described above were evaluated.
Incidentally, the flame retardancy was evaluated for optical fiber cables which were fabricated as follows using the flame-retardant resin compositions of Examples 1 to 21 and Comparative Examples 1 to 10.

(Fabrication of Optical Fibers Cable for Flame Retardancy Evaluation)

The flame-retardant resin compositions of Examples 1 to 21 and Comparative Examples 1 to 10 were charged into a single-screw extruder (25 mm φ extruder, manufactured by Marth Seiki CO., LTD.) and kneaded, and tubular extrudates were extruded from the extruder and coated on one coated optical fiber so as to have a short diameter of 1.8 mm and a long diameter of 2.6 mm. Optical fiber cables were thus fabricated.

<Flame Retardancy>

For ten of the optical fiber cables obtained as described above, a vertical combustion test for a single cable based on IEC 60332-1 was carried out. Thereafter, the proportion of self-extinguished optical fiber cables among the ten optical fiber cables was calculated as the pass rate (unit: %) based on the following formula, and this pass rate was taken as the evaluation index for flame retardancy.

$$\text{Pass rate (\%)} = 100 \times \text{number of self-extinguished}$$
$$\text{optical fiber cables/total number of tested optical fiber}$$
$$\text{cables (10)}$$

The results are presented in Tables 1 to 6. Incidentally, in Tables 1 to 6, the combustion time was also described. Here, the average value of combustion times of ten optical fiber cables was taken as the combustion time. In addition, the pass criteria for flame retardancy were set as follows.
(Pass Criteria) Pass rate is 100%

<Mechanical Properties>

Mechanical properties were evaluated for No. 3 dumbbell test pieces based on JIS K6251 which were fabricated using the flame-retardant resin compositions of Examples 1 to 21 and Comparative Examples 1 to 10. Specifically, five of the No. 3 dumbbell test pieces were prepared, a tensile test was conducted according to JIS C3005 for these five No. 3 dumbbell test pieces, and the fracture strength and elongation percentage thus measured were taken as the index for mechanical properties. The results are presented in Tables 1 to 6. Incidentally, the pass criteria for tensile strength and elongation percentage were set as follows. In addition, the tensile test was conducted under the conditions of a tensile speed of 200 mm/min and a gauge length of 20 mm.
(Pass Criteria) Tensile strength is 10 MPa or more and elongation percentage is 500% or more

<Weather Resistance>

Weather resistance was evaluated for No. 3 dumbbell test pieces which were the same as the No. 3 dumbbell test piece used in the evaluation on mechanical properties and were fabricated using the flame-retardant resin compositions of Examples 1 to 21 and Comparative Examples 1 to 10. Specifically, five of the No. 3 dumbbell test pieces were prepared first, and an accelerated weathering (S-UV) test was conducted for these five No. 3 dumbbell test pieces. At this time, the S-UV test was conducted using a metal halide lamp type weatherometer, and the testing conditions were as follows.

(Testing Conditions)

Black panel temperature: 63°C
Irradiation intensity: 0.53 kW/h
Irradiation wavelength: 300 to 400 nm
Irradiation time: 100 hours

Thereafter, a tensile test was conducted for the five dumbbell test pieces after the S-UV test in the same manner as the tensile test conducted in the evaluation on mechanical properties, and the tensile fracture strength and tensile elongation were thus measured. At this time, the average values of tensile fracture strength and tensile elongation of the five dumbbell test pieces were taken as values of tensile fracture strength and tensile elongation, respectively. Subsequently, the ratio (retention) of the tensile fracture strength after the S-UV test to the tensile fracture strength before the S-UV test was calculated as the retention of strength. In addition, the ratio (retention) of the tensile elongation after the S-UV test to the tensile elongation before the S-UV test was calculated as the retention of elongation. Moreover, the retention of strength and the retention of elongation were taken as an index of weather resistance. The results are presented in Tables 1 to 6. Incidentally, the pass criteria for weather resistance were set as follows.
(Pass Criteria) Retention of strength is 75% or more and retention of elongation is 60% or more

<Chemical Resistance>

Chemical resistance was evaluated for sheets which have dimensions of 13 mm $\times$ 40 mm $\times$ 3 mm (thickness) and were fabricated using the flame-retardant resin compositions of Examples 1 to 21 and Comparative Examples 1 to 10. Specifically, ten of the above sheets were prepared first, and an environmental stress crack resistance test based on ASTM D1693 was conducted for these ten sheets. Specifically, a 10% by mass aqueous solution of a surfactant (trade name "ANTAROK CO-650" manufactured by DSP GOKYO FOOD & CHEMICAL Co., Ltd.) was prepared and adjusted to 50°C, and the sheets were immersed in this aqueous solution and left to stand for 50 days. Thereafter, the presence or absence of cracks in the sheets after the test was visually observed. The chemical resistance was then evaluated based on the presence or absence of cracks in these sheets. The results are presented in Tables 1 to 6. The pass criteria for chemical resistance were set as follows.

(Pass Criteria) Cracks are not observed in all ten sheets

Incidentally, in Tables 1 to 6, "○" is denoted in the case of pass and "×" is denoted in the case of failure, namely, in a case in which cracks are observed in some of ten sheets.

[Table 1]

| Composition | | | Example 1 | Example 2 | Example 3 | Example 4 | Example 5 | Example 6 | Example 7 |
|---|---|---|---|---|---|---|---|---|---|
| Composition | Polyethylene A | PE1 (Density: 904 kg/m$^3$) | 85 | | | 75 | 94 | 85 | 85 |
| | | PE2 (Density: 890 kg/m$^3$) | | 85 | | | | | |
| | | PE3 (Density: 912 kg/m$^3$) | | | 85 | | | | |
| | | PE4 (Density: 920 kg/m$^3$) | | | | | | | |
| | Acid-modified polyolefin | Acid-modified polyethylene | 10 | 10 | 10 | 20 | 1 | 10 | 10 |
| | Silicone MB | Polyethylene B/silicone gum | 5/5 | 5/5 | 5/5 | 5/5 | 5/5 | 5/5 | 5/5 |
| | Calcium carbonate | | 40 | 40 | 40 | 40 | 40 | 10 | 120 |
| | Aluminum hydroxide | | 60 | 60 | 60 | 60 | 60 | 60 | 60 |
| | Fatty acid-containing compound | Magnesium stearate | 7 | 7 | 7 | 7 | 7 | 7 | 7 |
| | Antioxidant | Hindered phenol-based antioxidant | 0.2 | 0.2 | 0.2 | 0.2 | 0.2 | 0.2 | 0.2 |
| | Ultraviolet degradation inhibitor | Hindered amine-based light stabilizer | 0.8 | 0.8 | 0.8 | 0.8 | 0.8 | 0.8 | 0.8 |
| Density of polyethylene (unit: kg/m$^3$) | | | 904.6 | 891.4 | 912.2 | 904.7 | 904.6 | 904.6 | 904.6 |

(continued)

| Properties | | | | Example 1 | Example 2 | Example 3 | Example 4 | Example 5 | Example 6 | Example 7 |
|---|---|---|---|---|---|---|---|---|---|---|
| | Mechanical properties | Fracture strength (MPa) | | 16.9 | 15.8 | 14.5 | 16.8 | 16.8 | 20.2 | 11.2 |
| | | Elongation percentage (%) | | 640 | 690 | 600 | 670 | 680 | 680 | 600 |
| | Flame retardancy | Vertical combustion test for single cable | Pass rate (%) | 100 | 100 | 100 | 100 | 100 | 100 | 100 |
| | | | Combustion time (s) | 1 | 1 | 5 | 1 | 1 | 40 | 60 |
| | Weather resistance | S-UV test (after 100 h) | Retention of strength (%) | 85 | 80 | 76 | 86 | 84 | 95 | 80 |
| | | | Retention of elongation (%) | 98 | 88 | 62 | 99 | 98 | 95 | 89 |
| | Chemical resistance | Environmental stress crack resistance test | Presence or absence of cracks | ○ | ○ | ○ | ○ | ○ | ○ | ○ |

[Table 2]

| | | | Example 8 | Example 9 | Example 10 | Example 11 | Example 12 | Example 13 |
|---|---|---|---|---|---|---|---|---|
| Composition | Polyethylene A | PE1 (Density: 904 kg/m$^3$) | 85 | 85 | 88.5 | 80 | 85 | 85 |
| | | PE2 (Density: 890 kg/m$^3$) | | | | | | |
| | | PE3 (Density: 912 kg/m$^3$) | | | | | | |
| | | PE4 (Density: 920 kg/m$^3$) | | | | | | |
| | Acid-modified polyolefin | Acid-modified polyethylene | 10 | 10 | 10 | 10 | 10 | 10 |
| | Silicone MB | Polyethylene B/silicone gum | 5/5 | 5/5 | 1.5/1.5 | 10/10 | 5/5 | 5/5 |
| | Calcium carbonate | | 40 | 40 | 40 | 40 | 40 | 40 |
| | Aluminum hydroxide | | 5 | 150 | 60 | 60 | 60 | 60 |
| | Fatty acid-containing compound | Magnesium stearate | 7 | 7 | 7 | 7 | 5 | 20 |
| | Antioxidant | Hindered phenol-based antioxidant | 0.2 | 0.2 | 0.2 | 0.2 | 0.2 | 0.2 |
| | Ultraviolet degradation inhibitor | Hindered amine-based light stabilizer | 0.8 | 0.8 | 0.8 | 0.8 | 0.8 | 0.8 |
| Density of polyethylene (unit: kg/m$^3$) | | | 904.6 | 904.6 | 904.4 | 905.2 | 904.6 | 904.6 |
| Properties | Mechanical properties | Fracture strength (MPa) | 22.8 | 10.3 | 17.2 | 15.8 | 16.6 | 16.2 |
| | | Elongation percentage (%) | 730 | 555 | 650 | 630 | 642 | 630 |
| | Flame retardancy | Vertical combustion test for single cable | Pass rate (%) | 100 | 100 | 100 | 100 | 100 | 100 |
| | | | Combustion time (s) | 1 | 60 | 36 | 1 | 54 | 1 |
| | Weather resistance | S-UV test (after 100 h) | Retention of strength (%) | 95 | 76 | 88 | 78 | 88 | 76 |
| | | | Retention of elongation (%) | 98 | 69 | 98 | 87 | 97 | 79 |
| | Chemical resistance | Environmental stress crack resistance test | Presence or absence of cracks | ○ | ○ | ○ | ○ | ○ | ○ |

EP 3 375 815 A1

14

[Table 3]

| | | | Example 14 | Example 15 | Example 16 |
|---|---|---|---|---|---|
| Composition | Polyethylene A | PE1 (Density: 904 kg/m$^3$) | 85 | 85 | 85 |
| | | PE2 (Density: 890 kg/m$^3$) | | | |
| | | PE3 (Density: 912 kg/m$^3$) | | | |
| | | PE4 (Density: 920 kg/m$^3$) | | | |
| | Acid-modified polyolefin | Acid-modified polyethylene | | | |
| | | Acid-modified polypropylene | 10 | | |
| | | Ethylene-ethyl acrylate copolymer | | 10 | |
| | | Ethylene-vinyl acetate copolymer | | | 10 |
| | Silicone MB | Polyethylene B/silicone gum | 5/5 | 5/5 | 5/5 |
| | Calcium carbonate | | 40 | 40 | 40 |
| | Aluminum hydroxide | | 60 | 60 | 60 |
| | Fatty acid-containing compound | Magnesium stearate | 7 | 7 | 7 |
| | Antioxidant | Hindered phenol-based antioxidant | 0.2 | 0.2 | 0.2 |
| | Ultraviolet degradation inhibitor | Hindered amine-based light stabilizer | 0.8 | 0.8 | 0.8 |
| Density of polyethylene (unit: kg/m$^3$) | | | 904.6 | 904.6 | 904.6 |
| Properties | Mechanical properties | Fracture strength (MPa) | 12.0 | 13.5 | 12.8 |
| | | Elongation percentage (%) | 575 | 615 | 610 |
| | Flame retardancy | Vertical combustion test for single cable — Pass rate (%) | 100 | 100 | 100 |
| | | Vertical combustion test for single cable — Combustion time (s) | 6 | 10 | 17 |
| | Weather resistance | S-UV test (after 100 h) — Retention of strength (%) | 76 | 88 | 89 |
| | | S-UV test (after 100 h) — Retention of elongation (%) | 87 | 98 | 95 |
| | Chemical resistance | Environmental stress crack resistance test — Presence or absence of cracks | ○ | ○ | ○ |

[Table 4]

| | | | Example 17 | Example 18 | Example 19 | Example 20 | Example 21 |
|---|---|---|---|---|---|---|---|
| Composition | Polyethylene A | PE1 (Density: 904 kg/m$^3$) | 85 | 85 | 85 | 85 | 85 |
| | Acid-modified polyolefin | Acid-modified polyethylene | 10 | 10 | 10 | 10 | 10 |
| | Silicone MB | Polyethylene B/silicone gum | 5/5 | 5/5 | 5/5 | 5/5 | 5/5 |
| | Calcium carbonate | | 40 | 40 | 40 | 40 | 40 |
| | Aluminum hydroxide | | 60 | 60 | 60 | 60 | 60 |
| | Fatty acid-containing compound | Magnesium stearate | | | | | |
| | | Zinc stearate | 7 | | | | |
| | | Calcium stearate | | 7 | | | |
| | | Stearic acid | | | 7 | | |
| | | Behenic acid | | | | 7 | |
| | | Montanic acid | | | | | 7 |
| | Antioxidant | Hindered phenol-based antioxidant | 0.2 | 0.2 | 0.2 | 0.2 | 0.2 |
| | Ultraviolet degradation inhibitor | Hindered amine-based light stabilizer | 0.8 | 0.8 | 0.8 | 0.8 | 0.8 |
| Density of polyethylene (unit: kg/m$^3$) | | | 904.6 | 904.6 | 904.6 | 904.6 | 904.6 |
| Properties | Mechanical properties | Fracture strength (MPa) | 16.5 | 17.1 | 16.8 | 16.6 | 17.3 |
| | | Elongation percentag (%) | 630 | 655 | 645 | 630 | 645 |
| | Flame retardancy | Vertical combustion test for single cable — Pass rate (%) | 100 | 100 | 100 | 100 | 100 |
| | | Vertical combustion test for single cable — Combustion time (s) | 5 | 10 | 12 | 13 | 12 |
| | Weather resistance | S-UV test (after 100 h) — Retention of strength (%) | 80 | 82 | 84 | 82 | 80 |
| | | S-UV test (after 100 h) — Retention of elongation (%) | 95 | 94 | 93 | 92 | 93 |
| | Chemical resistance | Environmental stress crack resistance test — Presence or absence of cracks | ○ | ○ | ○ | ○ | ○ |

EP 3 375 815 A1

[Table 5]

| | | | Comparative Example 1 | Comparative Example 2 | Comparative Example 3 | Comparative Example 4 | Comparative Example 5 | Comparative Example 6 |
|---|---|---|---|---|---|---|---|---|
| Composition | Polyethylene A | PE1 (Density: 904 kg/m³) | | 95 | 85 | 85 | 85 | 85 |
| | | PE2 (Density: 890 kg/m³) | | | | | | |
| | | PE3 (Density: 912 kg/m³) | | | | | | |
| | | PE4 (Density: 920 kg/m³) | 85 | | | | | |
| | Acid-modified polyolefin | Acid-modified polyethylene | 10 | 0 | 10 | 10 | 10 | 10 |
| | Silicone MB | Polyethylene B/silicone gum | 5/5 | 5/5 | 5/5 | 5/5 | 5/5 | 5/5 |
| | Calcium carbonate | | 40 | 40 | 5 | 130 | 40 | 40 |
| | Aluminum hydroxide | | 60 | 60 | 60 | 60 | 3 | 160 |
| | Fatty acid-containing compound | Magnesium stearate | 7 | 7 | 7 | 7 | 7 | 7 |
| | Antioxidant | Hindered phenol-based antioxidant | 0.2 | 0.2 | 0.2 | 0.2 | 0.2 | 0.2 |
| | Ultraviolet degradation inhibitor | Hindered amine-based light stabilizer | 0.8 | 0.8 | 0.8 | 0.8 | 0.8 | 0.8 |
| Density of polyethylene (unit: kg/m³) | | | 919.7 | 904.6 | 904.6 | 904.6 | 904.6 | 904.6 |

| | | | Comparative Example 1 | Comparative Example 2 | Comparative Example 3 | Comparative Example 4 | Comparative Example 5 | Comparative Example 6 |
|---|---|---|---|---|---|---|---|---|
| Properties | Mechanical properties | Fracture strength (MPa) | 13.1 | 17.0 | 20.7 | 10.4 | 22.9 | 9.8 |
| | | Elongation percentage (%) | 560 | 690 | 690 | 590 | 740 | 530 |
| | Flame retardancy | Vertical combustion test for single cable — Pass rate (%) | 100 | 100 | 0 | 0 | 0 | 100 |
| | | Vertical combustion test for single cable — Combustion time (s) | 20 | 1 | Completely burned down | Completely burned down | Completely burned down | 52 |
| | Weather resistance | S-UV test (after 100 h) — Retention of strength (%) | 65 | 85 | 90 | 77 | 96 | 70 |
| | | S-UV test (after 100 h) — Retention of elongation (%) | 57 | 97 | 98 | 85 | 98 | 53 |
| | Chemical resistance | Environmental stress crack resistance test — Presence or absence of cracks | ○ | × | ○ | ○ | ○ | ○ |

[Table 6]

| Composition | | | Comparative Example 7 | Comparative Example 8 | Comparative Example 9 | Comparative Example 10 |
|---|---|---|---|---|---|---|
| | Polyethylene A | PE1 (Density: 904 kg/m$^3$) | 89 | 79 | 85 | 85 |
| | | PE2 (Density: 890 kg/m$^3$) | | | | |
| | | PE3 (Density: 912 kg/m$^3$) | | | | |
| | | PE4 (Density: 920 kg/m$^3$) | | | | |
| | Acid-modified polyolefin | Acid-modified polyethylene | 10 | 10 | 10 | 10 |
| | Silicone MB | Polyethylene B/silicone gum | 1/1 | 11/11 | 5/5 | 5/5 |
| | Calcium carbonate | | 40 | 40 | 40 | 40 |
| | Aluminum hydroxide | | 60 | 60 | 60 | 60 |
| | Fatty acid-containing compound | Magnesium stearate | 7 | 7 | 4 | 21 |
| | Antioxidant | Hindered phenol-based antioxidant | 0.2 | 0.2 | 0.2 | 0.2 |
| | Ultraviolet degradation inhibitor | Hindered amine-based light stabilizer | 0.8 | 0.8 | 0.8 | 0.8 |
| Density of polyethylene (unit: kg/m$^3$) | | | 904.2 | 905.3 | 904.6 | 904.6 |

(continued)

| | | | Comparative Example 7 | Comparative Example 8 | Comparative Example 9 | Comparative Example 10 |
|---|---|---|---|---|---|---|
| Properties | Mechanical properties | Fracture strength (MPa) | 17.3 | 15.6 | 17.8 | 15.8 |
| | | Elongation percentage (%) | 660 | 610 | 660 | 620 |
| | Flame retardancy | Vertical combustion test for single cable — Pass rate (%) | 0 | 100 | 0 | 100 |
| | | Vertical combustion test for single cable — Combustion time (s) | Completely burned down | 1 | Completely burned down | 1 |
| | Weather resistance | S-UV test (after 100 h) — Retention of strength (%) | 89 | 73 | 89 | 70 |
| | | S-UV test (after 100 h) — Retention of elongation (%) | 97 | 70 | 99 | 73 |
| | Chemical resistance | Environmental stress crack resistance test — Presence or absence of cracks | ○ | ○ | ○ | ○ |

From the results presented in Tables 1 to 6, the flame-retardant resin compositions of Examples 1 to 21 satisfied the pass criteria for flame retardancy, mechanical properties, weather resistance, and chemical resistance. In contrast, the flame-retardant resin compositions of Comparative Examples 1 to 10 did not satisfied the pass criteria for at least one of flame retardancy, mechanical properties, weather resistance, or chemical resistance.

From this fact, it was confirmed that the flame-retardant resin composition of the present invention can simultaneously satisfy excellent flame retardancy, mechanical properties, weather resistance, and chemical resistance.

EXPLANATIONS OF LETTERS OR NUMERALS

1     Internal conductor (metal conductor)
2     Insulating body
3     Outer sheath (insulating body)
4     Insulating wire
10    Round cable (metal cable)
20    Indoor type optical fiber cable
24    Optical fiber
25    Sheath (insulating body)

**Claims**

1. A flame-retardant resin composition comprising:

   a base resin composed of polyethylene and an acid-modified polyolefin;
   calcium carbonate;
   aluminum hydroxide;
   a silicone compound; and
   a fatty acid-containing compound, wherein
   a density of the polyethylene is 912.4 kg/m$^3$ or less,
   a content rate of the polyethylene in the base resin is 80% by mass or more and 99% by mass or less,
   a content rate of the acid-modified polyolefin in the base resin is 1% by mass or more and 20% by mass or less,
   the calcium carbonate is blended at a proportion of 10 parts by mass or more and 120 parts by mass or less with respect to 100 parts by mass of the base resin,
   the aluminum hydroxide is blended at a proportion of 5 parts by mass or more and 150 parts by mass or less with respect to 100 parts by mass of the base resin,
   the silicone compound is blended at a proportion of 1.5 parts by mass or more and 10 parts by mass or less with respect to 100 parts by mass of the base resin, and
   the fatty acid-containing compound is blended at a proportion of 5 parts by mass or more and 20 parts by mass or less with respect to 100 parts by mass of the base resin.

2. The flame-retardant resin composition according to claim 1, wherein a density of the polyethylene is 905.3 kg/m$^3$ or less.

3. The flame-retardant resin composition according to claim 1 or 2, wherein the acid-modified polyolefin is a maleic anhydride-modified polyolefin.

4. The flame-retardant resin composition according to any one of claims 1 to 3, wherein the aluminum hydroxide is blended to the base resin at a proportion of 5 parts by mass or more and 100 parts by mass or less.

5. The flame-retardant resin composition according to any one of claims 1 to 4, wherein the silicone compound is silicone gum.

6. The flame-retardant resin composition according to any one of claims 1 to 5, wherein the fatty acid-containing compound is magnesium stearate.

7. The flame-retardant resin composition according to any one of claims 1 to 6, wherein the fatty acid-containing compound is blended to the base resin at a proportion of 7 parts by mass or more and 20 parts by mass or less.

8. A metal cable comprising:

   a metal conductor; and
   an insulating body covering the metal conductor,
   wherein
   the insulating body is composed of the flame-retardant resin composition according to any one of claims 1 to 7.

9. An optical fiber cable comprising:

   an optical fiber; and
   an insulating body covering the optical fiber, wherein
   the insulating body is composed of the flame-retardant resin composition according to any one of claims 1 to 8.

10. A molded article comprising the flame-retardant resin composition according to any one of claims 1 to 7.

# Fig.1

# Fig.2

10

1  2

4

3

# Fig.3

20

22

25

24

23

## INTERNATIONAL SEARCH REPORT

International application No.

PCT/JP2016/084640

**A. CLASSIFICATION OF SUBJECT MATTER**

*C08L23/06*(2006.01)i, *C08K3/22*(2006.01)i, *C08K3/26*(2006.01)i, *C08K5/098*
(2006.01)i, *C08L23/26*(2006.01)i, *G02B6/44*(2006.01)i, *H01B3/44*(2006.01)i,
*H01B7/02*(2006.01)i, *H01B7/295*(2006.01)i, *C08L83/04*(2006.01)n

According to International Patent Classification (IPC) or to both national classification and IPC

**B. FIELDS SEARCHED**

Minimum documentation searched (classification system followed by classification symbols)
C08L23/06, C08K3/22, C08K3/26, C08K5/098, C08L23/26, G02B6/44, H01B3/44,
H01B7/02, H01B7/295, C08L83/04

Documentation searched other than minimum documentation to the extent that such documents are included in the fields searched
　　Jitsuyo Shinan Koho　　　　1922-1996　Jitsuyo Shinan Toroku Koho　1996-2016
　　Kokai Jitsuyo Shinan Koho　1971-2016　Toroku Jitsuyo Shinan Koho　1994-2016

Electronic data base consulted during the international search (name of data base and, where practicable, search terms used)
　　JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| A | WO 2015/111309 A1　(Fujikura Ltd.),<br>30 July 2015 (30.07.2015),<br>entire text<br>& CN 105916930 A | 1-10 |
| A | JP 2007-161787 A　(Tokuyama Corp.),<br>28 June 2007 (28.06.2007),<br>entire text<br>(Family: none) | 1-10 |
| A | JP 10-7913 A　(Alcatel Alsthom Compagnie<br>Generale d'Electricite),<br>13 January 1998 (13.01.1998),<br>entire text<br>& US 6429246 B1<br>entire text<br>& EP 802235 A1 | 1-10 |

☒ Further documents are listed in the continuation of Box C. ☐ See patent family annex.

| | |
|---|---|
| *　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>　　08 December 2016 (08.12.16) | Date of mailing of the international search report<br>　　20 December 2016 (20.12.16) |
|---|---|
| Name and mailing address of the ISA/<br>　　Japan Patent Office<br>　　3-4-3,Kasumigaseki,Chiyoda-ku,<br>　　Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/084640

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 5890077 B1 (Fujikura Ltd.),<br>22 March 2016 (22.03.2016),<br>entire text<br>& WO 2016/031789 A1 | 1-10 |
| A | JP 2015-183157 A (Fujikura Ltd.),<br>22 October 2015 (22.10.2015),<br>entire text<br>(Family: none) | 1-10 |
| A | JP 2001-184946 A (The Furukawa Electric Co.,<br>Ltd.),<br>06 July 2001 (06.07.2001),<br>entire text<br>(Family: none) | 1-10 |
| A | JP 10-255560 A (Hitachi Cable Ltd.),<br>25 September 1998 (25.09.1998),<br>entire text<br>(Family: none) | 1-10 |
| A | JP 2003-335962 A (Sekisui Chemical Co., Ltd.),<br>28 November 2003 (28.11.2003),<br>entire text<br>& JP 2009-1012 A | 1-10 |
| A | JP 2014-101454 A (Hitachi Metals, Ltd.),<br>05 June 2014 (05.06.2014),<br>entire text<br>& US 2014/0141245 A1<br>entire text<br>& CN 103839622 A      & CN 105206324 A | 1-10 |
| A | JP 2006-225568 A (Riken Technos Corp.),<br>31 August 2006 (31.08.2006),<br>entire text<br>(Family: none) | 1-10 |
| A | JP 2015-168697 A (Hitachi Metals, Ltd.),<br>28 September 2015 (28.09.2015),<br>entire text<br>& CN 104893078 A      & CN 105070355 A | 1-10 |
| A | JP 2002-241554 A (Fujikura Ltd.),<br>28 August 2002 (28.08.2002),<br>entire text<br>(Family: none) | 1-10 |
| A | JP 2015-201448 A (Hitachi Metals, Ltd.),<br>12 November 2015 (12.11.2015),<br>entire text<br>(Family: none) | 1-10 |

Form PCT/ISA/210 (continuation of second sheet) (January 2015)

**INTERNATIONAL SEARCH REPORT**

| International application No. |
| --- |
| PCT/JP2016/084640 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2015-151402 A  (Unitika Ltd.), 24 August 2015 (24.08.2015), entire text (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015111309 A